# EUROPEAN PATENT APPLICATION

(11) **EP 2 017 720 A2**
(43) Date of publication of application: **21.01.2009**
(21) Application number: 08160628.7
(22) Date of filing: 17.07.2008
(51) Int. Cl.: G06F 3/12

(54) **Methods and systems for routing large, high-volume, high-variability print jobs in a document production environment**

(30) Priority: 18.07.2007 US 779464
(71) Applicant: Xerox Corporation, Rochester, New York 14644 (US)
(72) Inventor: Rai, Sudhendu, Fairport, NY 14450 (US)
(74) Representative: Grünecker, Kinkeldey, Stockmair & Schwanhäusser Anwaltssozietät

(57) **Abstract**

A system of scheduling a plurality of print jobs in a document production environment may include a plurality of print job processing resources and a computer-readable storage medium including programming instructions for performing a method of processing a plurality of print jobs. The method may include receiving a plurality of print jobs and setup characteristics corresponding to each print job, grouping each print job having a job size that exceeds a job size threshold into a large job subgroup and grouping each print job having a job size that does not exceed the job size threshold into a small job subgroup. The large job subgroup may be classified as a high setup subgroup or a low setup subgroup based on the setup characteristics corresponding to each print job in the large job subgroup The large job subgroup may be routed to a large job autonomous cell.

## Description

### BACKGROUND

The disclosed embodiments relate generally to a method for scheduling jobs and, more specifically, to a method of scheduling and routing a print job stream in a print production environment.

Document production environments, such as print shops, convert printing orders, such as print jobs, into finished printed material. A print shop may process print jobs using resources such as printers, cutters, collators and other similar equipment. Typically, resources in print shops are organized such that when a print job arrives from a customer at a particular print shop, the print job can be processed by performing one or more production functions. Scheduling architectures that organize print jobs arriving at a document production environment and route the print jobs to autonomous cells are known in the art and are described in, for example, U.S. Patent No. 7,051,328 to Rai et al. and U.S. Patent No. 7,065,567 to Squires et al., the disclosures of which are incorporated by reference in their entirety.

Production environments can receive high volume jobs. In addition, there can be significant variability associated with the jobs due to multiple types of setup characteristics associated with each job. As such, the known scheduling architecture may be inefficient in processing high volume, highly variable jobs.

Transaction print environments that process jobs having a heavy-tailed job-size distribution tend to have inefficient job flows. This is because these environments typically handle very large and very small jobs that are all part of one job pool. It is likely that several small jobs may be delayed if they are queued behind a very large job. Similarly, large jobs can experience flow interruptions if several small jobs requiring multiple setups are ahead of the large jobs in the queue.

### SUMMARY

Before the present methods are described, it is to be understood that this invention is not limited to the particular systems, methodologies or protocols described, as these may vary. It is also to be understood that the terminology used herein is for the purpose of describing particular embodiments only, and is not intended to limit the scope of the present disclosure which will be limited only by the appended claims.

It must be noted that as used herein and in the appended claims, the singular forms "a," "an," and "the" include plural reference unless the context clearly dictates otherwise. Thus, for example, reference to a "job" is a reference to one or more jobs and equivalents thereof known to those skilled in the art, and so forth. Unless defined otherwise, all technical and scientific terms used herein have the same meanings as commonly understood by one of ordinary skill in the art. As used herein, the term "comprising" means "including, but not limited to."

In an embodiment, a system of scheduling a plurality of print jobs in a document production environment may include a plurality of print job processing resources and a computer-readable storage medium comprising one or more programming instructions for performing a method of processing a plurality of print jobs in a document production environment. The method may include receiving a plurality of print jobs and at least one setup characteristic corresponding to each print job. Each print job may have a corresponding job size. The method may also include determining, for each print job, whether the corresponding job size exceeds a job size threshold, grouping each print job having a job size that exceeds the job size threshold into a large job subgroup, grouping each print job having a job size that does not exceed the job size threshold into a small job subgroup and routing the small job subgroup to a small job autonomous cell comprising one or more resources for processing the small job subgroup. The large job subgroup may be classified as a high setup subgroup or a low setup subgroup based on the setup characteristics corresponding to each print job in the large job subgroup. The large job subgroup may be routed to a large job autonomous cell. If the large job subgroup is a high setup subgroup, the large job autonomous cell may include one or more first resources for processing the large job subgroup. If the large job subgroup is a low setup subgroup, the large job autonomous cell may include one or more second resources for processing the large job subgroup.

In an embodiment, a computer-implemented method of scheduling a plurality of print jobs in a document production environment may include receiving a plurality of print jobs and at least one setup characteristic corresponding to each print job. Each print job may have a corresponding job size. The method may also include determining, for each print job, whether the corresponding job size exceeds a job size threshold, grouping each print job having a job size that exceeds the job size threshold into a large job subgroup, grouping each print job having a job size that does not exceed the job size threshold into a small job subgroup and routing the small job subgroup to a small job autonomous cell comprising one or more resources for processing the small job subgroup. The large job subgroup may be classified as a high setup subgroup or a low setup subgroup based on the setup characteristics corresponding to each print job in the large job subgroup. The large job subgroup may be routed to a large job autonomous cell. If the large job subgroup is a high setup subgroup, the large job autonomous cell may include one or more first resources for processing the large job subgroup. If the large job subgroup is a low setup subgroup, the large job autonomous cell may include one or more second resources for processing the large job subgroup. 16. The method of claim 13, wherein grouping each print job having a job size that exceeds the job size threshold into a large job subgroup comprises: arranging the print jobs in the
large job subgroup based on a due date of each print job **; and**

The method of claim 13, wherein grouping each print job having a job size that does not exceed the job size threshold into
a small job subgroup comprises: **arranging the print jobs in the small job subgroup based on a due**
arranging the print jobs in the small job subgroup based on a due date of each print job. **date of each print job.**

The method of claim 13,**1** wherein classifying the large job subgroup comprises: identifying one or more setup characteristics associated with the large job subgroup, wherein each setup characteristic has one or more associated types; for each setup characteristic, determining the number of types associated with the large job subgroup;
determining that the large job subgroup is a high setup subgroup if the number of associated types of at least one setup characteristic exceeds a threshold value associated with the
setup characteristic; and
determining that the large job subgroup is a low setup subgroup if, for each setup characteristic, the number of corresponding types does not exceed the threshold value associated with the setup characteristic.

In a further embodiment the method further comprises:
comparing the number of associated types to an average number of types associated with
the setup characteristic over a specified time period.

In a further embodiment routing the small subgroup comprises:
using a routing policy selected from a random policy, a round-robin policy, a least work-in-progress policy and a size interval task assignment with equal load policy.

In a further embodiment routing the large job subgroup comprises:
determining a work-in-progress level for each large job autonomous cell, wherein the work-in-progress level represents a level of print work that is being processed in the large job autonomous cell at a specified time; and
routing the large subgroup to the large job autonomous cell with the smallest work-in-progress level.

In a further embodiment routing the large job subgroup comprises:
using a round-robin policy to route the large job subgroup to a large job autonomous
cell.

In a further embodiment routing the large job subgroup comprises:
randomly routing the large job subgroup to a large job autonomous cell.

In a further embodiment routing the large job subgroup comprises:
determining a range of job sizes for the print jobs in the large job subgroup; and
routing the large job subgroup to a large job autonomous cell, wherein the large job autonomous cell processes the determined range of job sizes.

### BRIEF DESCRIPTION OF THE DRAWINGS

FIG. 1 illustrates an exemplary print shop production environment according to an embodiment.
FIG. 2A depicts an exemplary plurality of jobs according to an embodiment.
FIG. 2B depicts an exemplary large job subgroup according to an embodiment.
FIG. 2C depicts an exemplary small job subgroup according to an embodiment.
FIG. 3 depicts an exemplary plurality of jobs and corresponding form types and insert types according to an embodiment.
FIG. 4 depicts an exemplary fast job subgroup according to an embodiment.
FIG. 5 depicts an exemplary plurality of jobs according to an embodiment.
FIG. 6 depicts an exemplary plurality of jobs according to an embodiment.
FIG. 7A depicts an exemplary plurality of jobs and corresponding job sizes, form types and insert types according to an embodiment.
FIG. 7B depicts an exemplary large job subgroup according to an embodiment.
FIG. 7C depicts an exemplary small job subgroup according to an embodiment.
FIG. 8 depicts an exemplary plurality of autonomous cells and corresponding utilization percentages and positions in a sequence according to an embodiment.
FIG. 9 depicts an exemplary graph of a job size distribution and size intervals using the SITA-E routing policy according to an embodiment.
FIG. 10 depicts an exemplary flow chart of a partitioning process according to an embodiment.
FIG. 11 depicts an exemplary environment suitable for processing a plurality of jobs according to an embodiment.

### DETAILED DESCRIPTION

For purposes of the discussion below, a "print shop" refers to an entity that includes a plurality of document production resources, such as printers, cutters, collators and the like. The print shop may be a freestanding entity, including one or more print-related devices, or it may be part of a corporation or other entity. Additionally, the print shop may communicate with one or more servers by way of a local area network or a wide area network, such as the Internet or the World Wide Web.

A "job" refers to a logical unit of work that is to be completed for a customer. A job may include one or more print jobs from one or more clients, A production system may include a plurality of jobs. Although the disclosed embodiments pertain to document production systems, the disclosed methods and systems can be applied to production systems in general.

A "print job" refers to a job processed in a document production system. For example, a print job may include producing credit card statements corresponding to a certain credit card company, producing bank statements corresponding to a certain bank, printing a document, or the like. Although the disclosed embodiments pertain to print jobs, the disclosed methods and systems can be applied to jobs in general in other production environments, such as automotive manufacturing, semiconductor production and the like.

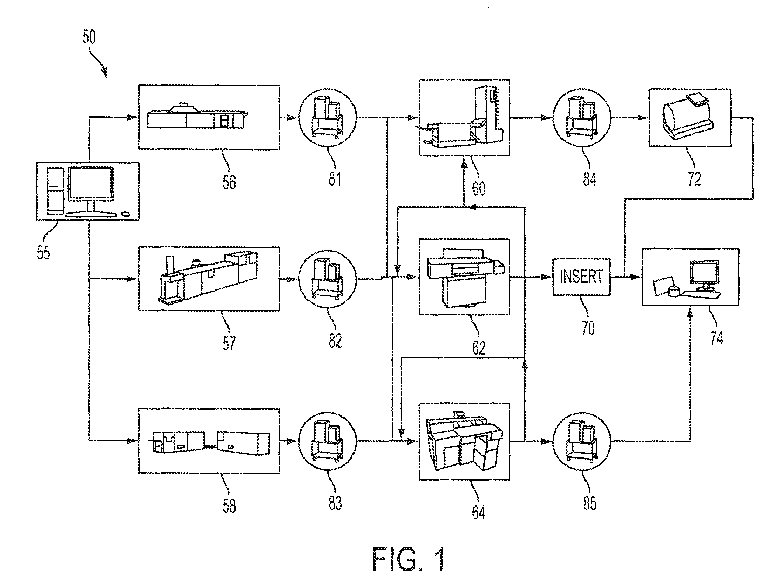

FIG. 1 shows an example of a production environment **50**, in this case, exemplary elements of a print shop. Print jobs may enter the print shop manually or electronically and be collected at an electronic submission system **55** such as a computing device and/or scanner. Jobs are sorted and batched at the submission system or another location before being delivered to one or more print engines such as a color printer **56**, black-and-white printer **57** and/or a continuous feed printer **58**. Jobs may exit the print engine and be delivered to one or more finishing devices or areas such as a collator**60**, cutter **62**, and/or binder **64**. The finishing areas may include automatic or manual areas for such finishing activities and they also may include an automatic or manual inserter **70**. Finally, jobs may move to a postage metering station **72** and/or shipping station **74**. Jobs may move from one location to another in the print shop by automatic delivery or manual delivery such as by hand or by one or more paper carts **81-85**.

Jobs may have different processing requirements. For example, incoming jobs may have variable job sizes, setup requirements, processing frequency and the like. An autonomous cell refers to a group of resources used to process jobs. An autonomous cell may include the resources needed to complete at least one job. For example, if the job requires printing, cutting and collating, an autonomous cell for processing the job may include at least one printer, one cutter and one collator.

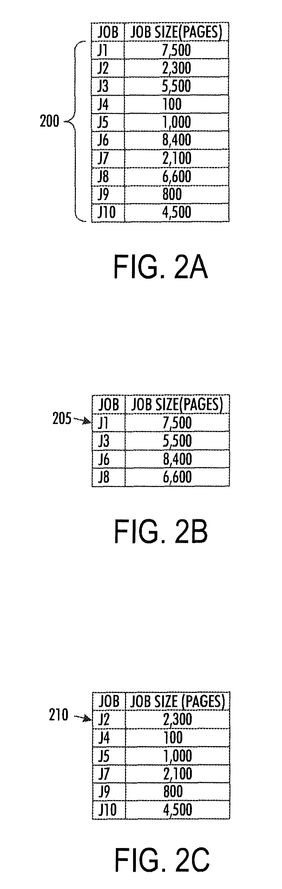

In an embodiment, jobs may be partitioned into subgroups based on job size. FIG. 2A illustrates a plurality of jobs, JI-J10 **200,** and corresponding job sizes. In an embodiment, the size of each job may be determined and compared to a threshold size. The threshold size may represent a threshold number of pages associated with each job necessary to optimize process flow. If the size of a job equals or exceeds the threshold size, the job may be classified as a large job. If the size of a job is less than the threshold volume, the job may be classified as a small job.

As illustrated in FIG. 2B, job J1 **205** is grouped in a large job subgroup because its size (i.e., 7,500 pages) exceeds the threshold size (i.e., 5,000 pages). Similarly, as illustrated in FIG. 2C, job J2 **210** is grouped in a small job subgroup because its size (i.e., 2,300 pages) is less than the threshold size (i.e., 5,000 pages).

In an embodiment, a subgroup may be categorized based on setup characteristics. A setup characteristic may include a feature of any step in the production process. For example, in a document production system, the printer setup may be dependent on the type of form used. Alternatively, the insertion operation setup may depend on one or more inserts associated with each job.

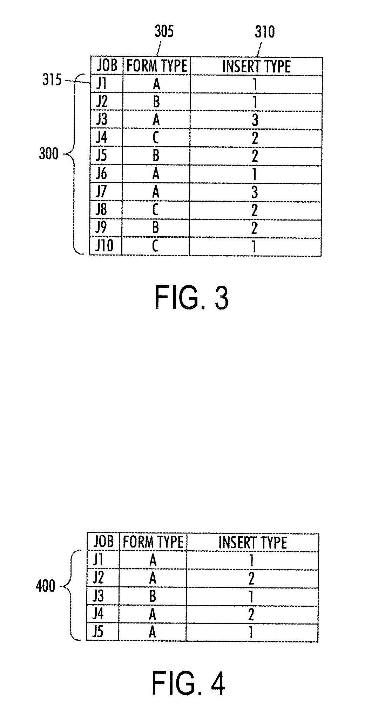

In an embodiment, each setup characteristic may be associated with one or more types. For example, a form type setup characteristic may be associated with three types of forms: form A, form B and form C. Subgroups may be categorized based on the number of types associated with each setup characteristic. For example, a subgroup may be associated with two setup characteristics, such as form type and insert type. As illustrated by FIG. 3, ten jobs, jobs J1-J10 **300** may be associated with a form type setup characteristic **305** and an insert type characteristic **310**. For example, job J1 **315** may be associated with form type A and insert type 1.

In an alternate embodiment, subgroups may be categorized based on the average number of types associated with each setup characteristic over a specified interval. In addition, the average number of setup characteristics may be evaluated over multiple intervals. For example, a subgroup may utilize one form type on day 1, three form types on day 2 and two form types on day 3, thus producing an average of two form types per day.

In an embodiment, a threshold value may be determined for each setup characteristic. The threshold value may represent the number of types associated with each setup characteristic that may be necessary to optimize job flow. The threshold value may be determined using a simulation model, such as a model based on discrete event simulation, to simulate and optimize the workflow. A simulation-based approach may be used to determine an optimal number of types for each setup characteristic. For example, multiple simulations may be run for different threshold values to determine an optimal threshold value.

In an embodiment, a subgroup may be categorized based on a comparison between the number of types associated with each setup characteristic and the threshold value for each setup characteristic. For example, if the threshold value associated with form type is '2' and the threshold value associated with insert type is '3', a subgroup having two or fewer form types and three or fewer insert types may be identified as a low setup subgroup. A low setup subgroup may include jobs that have low setup requirements when compared to the thresholds associated with the setup requirements. For example, a low setup subgroup may include print jobs with similar setup requirements which may ease transitioning from one job to the next.

A subgroup having more than two form types and/or more than three insert types may be identified as a high setup subgroup or the like. A high setup subgroup may include jobs that have high setup requirements when compared to the thresholds associated with the setup requirements. For example, a high setup subgroup may include several small to mid-sized jobs with substantially different setup requirements which may cause significant delays in transitioning from one job to the next.

FIG. 4 illustrates categorizing a subgroup **400,** J1-J5, in this manner. As illustrated in FIG. 4, subgroup **400** utilizes two form types (i.e., form type A and form type B) and two insert types (i.e., insert type 1 and insert type 2). If the form type threshold value is 2 and the insert type threshold value is 3, then the subgroup **400** may be identified as a low setup subgroup because the number of form types associated with the subgroup equals the form type threshold value and because the number of insert types associated with the subgroup is less than the insert type threshold value.

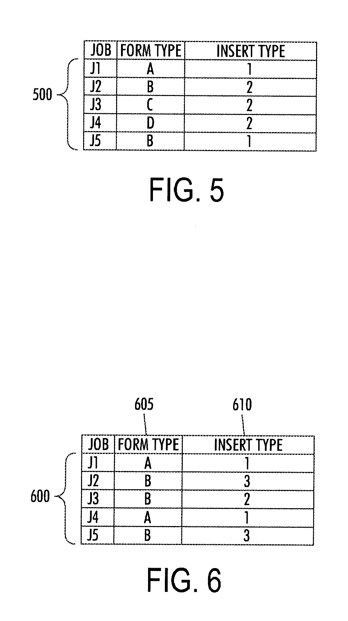

In comparison, as illustrated by FIG. 5, the subgroup **500,** J1-J5, utilizes four form types (i.e., form type A, form type B, form type C and form type D) and two insert types (i. e., insert type 1 and insert type 2). Even though the number of insert types associated with the subgroup **500** (i.e., 2) is less than the threshold value associated with the insert type setup characteristic (i.e., 3), the subgroup **500** may be identified as a high setup subgroup because the number of form types associated with the subgroup **500** (i.e., 4) exceeds the threshold value associated with the form type setup characteristic (i.e., 2).

In an alternate embodiment, a subgroup may be grouped based on different threshold conditions. For example, a subgroup may be identified as a low setup subgroup if the number of types associated with one setup characteristic is less than the threshold value associated with that setup characteristic. For example, a subgroup may be identified as a low setup subgroup if the number of form types associated with the subgroup is less than or equal to the threshold value associated with the form type characteristic. Referring to FIG. 5, if the form type threshold value is 5, then the subgroup **500** may be identified as a low setup subgroup because the subgroup **500** utilizes four form types which is less than the threshold value associated with the form type characteristic.

In another embodiment, a subgroup may be identified according to a plurality of thresholds associated with the same setup characteristic. For example, a subgroup having a number of types less than a first threshold value, but more than a second threshold value may be grouped an intermediate setup subgroup. FIG. 6 illustrates a subgroup **600**, J1-J5, having a form type setup characteristic **605** and an insert type setup characteristic **610**. The first threshold value associated with the form type setup characteristic may be '3', and the second threshold value associated with the form type setup characteristic may be '1'. Similarly, the first setup characteristic associated with the insert type setup characteristic may be '4', and the second threshold value associated with the insert type setup characteristic may be '2'.

The subgroup **600** utilizes two form types (i.e., form type A and form type B) which is between the first threshold value (i.e., 3) and the second threshold value (i.e., 1) associated with the form type characteristic. The subgroup also utilizes three insert types (i.e., insert type 1, insert type 2 and insert type 3) which is between the first threshold value (i.e., 4) and the second threshold value (i.e., 2) associated with the insert type characteristic.

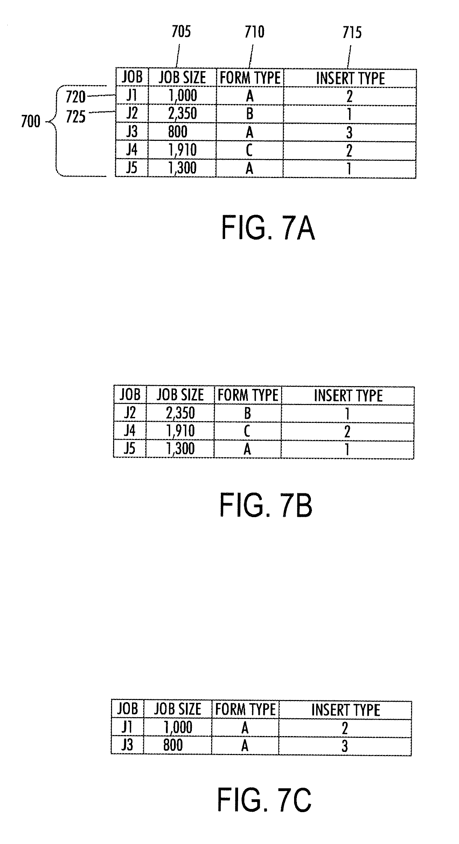

In an embodiment, a subgroup may be categorized based on multiple job attributes. For example, jobs may first be grouped into a large job subgroup or a small job subgroup based on job sizes. FIG. 7A illustrates jobs, J1-J5 **700**, and corresponding job sizes **705**, form types **710** and insert types **715**.

If the threshold job size value is 1100 pages, for example, the jobs **700** may be grouped into a large job subgroup, illustrated by FIG. 7B, and a small job subgroup, illustrated by FIG. 7C. For example, the size of job J1 **720** (i.e., 1,000 pages) is less than the threshold job size value, so job J1 may be grouped in a small job subgroup. Likewise, the size of job J2 **7**25 (i.e., 2,350 pages) exceeds the threshold job size value, so job J2 may be grouped in a large job subgroup.

The large job subgroup illustrated in FIG. 7B may be categorized as a low setup subgroup or a high setup subgroup based on the setup characteristics associated with the subgroup. For example, if the form type threshold value is 2 and the insert type threshold value is 2, then the large job subgroup may be identified as a high setup subgroup because the number of form types associated with the large job subgroup (i.e., 3) exceeds the form type threshold value.

Although this embodiment illustrates categorizing jobs first based on job size, then based on setup characteristics, additional and/or alternate methodologies may be used within the scope of this disclosure.

In an embodiment, jobs in a subgroup may be arranged prior to being processed. For example, jobs may be sequenced according to a first-in-first-out ("FIFO") policy, an earliest due date ("EDD") policy or the like.

A FIFO policy may arrange jobs based on the order in which they were received. For example, a subgroup may contain three jobs, J1-J3. If J2 is received first, J1 is received second and J3 is received third, the subgroup may be processed in the following order: J2, J1, J3.

An EDD policy may arrange jobs based on the order in which they are due For example, a subgroup may contain three jobs, J1-J3. If J3 is due first, J1 is due second and J2 is due last, then the subgroup may be processed in the following order: J3, J1, J2.

In an embodiment, a subgroup may be routed to one or more autonomous cells using a least work-in-progress policy, a round robin policy, a random policy, a size interval task assignment with equal load ("SITA-E") policy or the like.

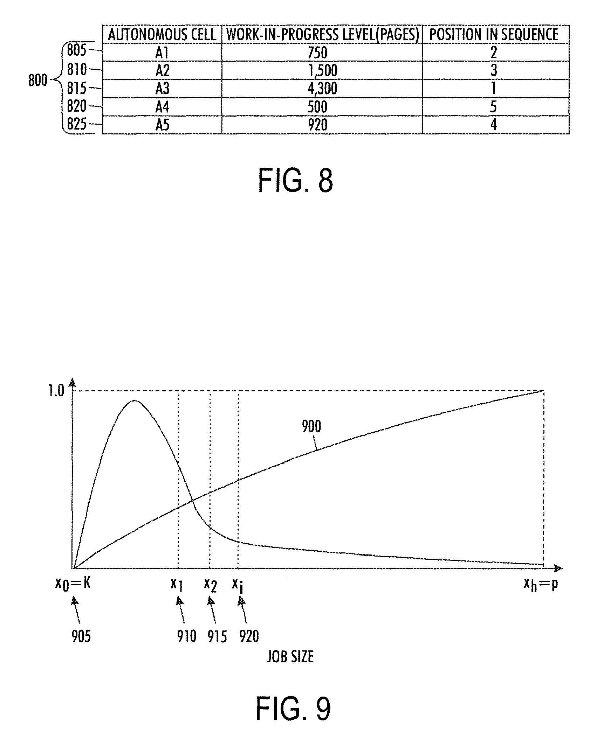

A least work-in-progress policy may determine a volume of work within each autonomous cell and may route job sets to the autonomous cell with the smallest work volume. For example, as illustrated by FIG. 8, autonomous cell A4 **820** has the lowest volume of all autonomous cells, A1-A5 **800**, so using a least work-in-progress policy, a job may be routed to autonomous cell A4 820.

A round robin policy may route a subgroup to an autonomous cell in a particular order. For example, autonomous cells may receive subgroups sequentially or in a specified order. The round robin policy may route a subgroup to the autonomous cell which is next in the order. As illustrated by FIG. 8, autonomous cells A1-A5 **800** may receive subgroups in a specified sequence based on each cell's position in the sequence, namely: A3 **815**, A1 **805**, A2 **810**, A5 **825**, A4 **820**. As such, if autonomous cell A2 **810** received the last subgroup, autonomous cell A5 **825** may receive the next subgroup using a round robin policy.

A random policy may randomly route jobs to an autonomous cell. For example, referring to FIG. 8, any one of the autonomous cells A1-A5 **800** may have an equal probability of receiving a job.

A SITA-E policy may route subgroups to an autonomous cell tasked with processing job sets of similar sizes. For example, each autonomous cell may be assigned a separate range of job sizes so that the total load each autonomous cell receives is roughly the same. In an embodiment, a job size distribution appearing to have heavy-tailed characteristics may be modeled using a bounded Pareto distribution such that:
k ≤ x ≤ p

Variable k may represent the smallest job size in the distribution, variable p may represent the largest job size in the distribution and may represent the index of stability that may be determined through fitting the distribution. The job size distribution may then be divided into multiple segments where each segment may be represented as:
= if
= if
F(x) = Pr {X ≤ x}

FIG. 9 illustrates an exemplary job size cumulative density function curve and corresponding segments according to an embodiment. For example, the area under the cumulative density curve **900** between x₀= k **905** and x₁ **910** may be substantially the same as the area under the cumulative density curve 900 between x₁ **910** and x₂ **915**, between x₂ **915** and xᵢ **920**, and so on, where x₁, x₂, xᵢ, ...., xₕ represent job sizes between the smallest job size in the distribution (i.e., k) and the largest job size in the distribution (i.e., p). As such, the range of job sizes associated with jobs in a subgroup may be determined and the jobs may be routed to an autonomous cell which processes jobs of the determined size range.

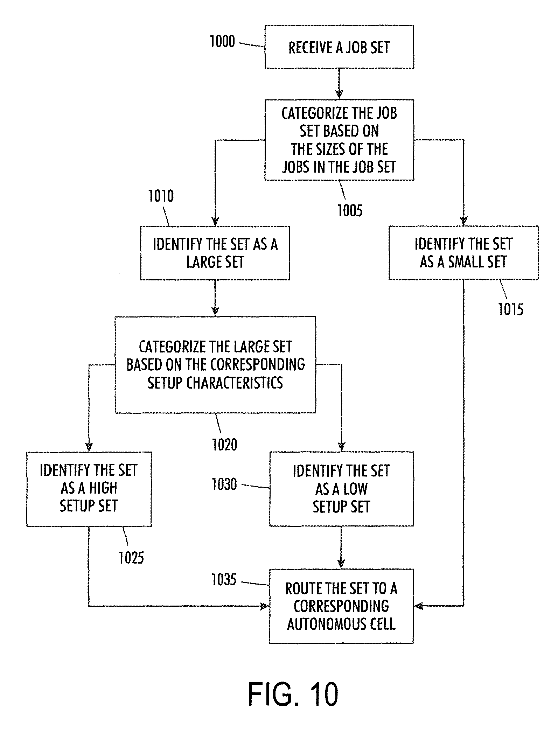

FIG. 10 illustrates an exemplary flow chart of a grouping a plurality of jobs according to an embodiment. A plurality of jobs may be received **1000** and the jobs may be grouped **1005** based on job size. The jobs may either be identified as a large job subgroup **1010** or a small job subgroup **1015**. A large job subgroup may be categorized **1020** based on setup characteristics as a high setup subgroup **1025** or a low setup subgroup **1030**. The print job subgroups may be routed **1035** to one or more corresponding autonomous cells for processing.

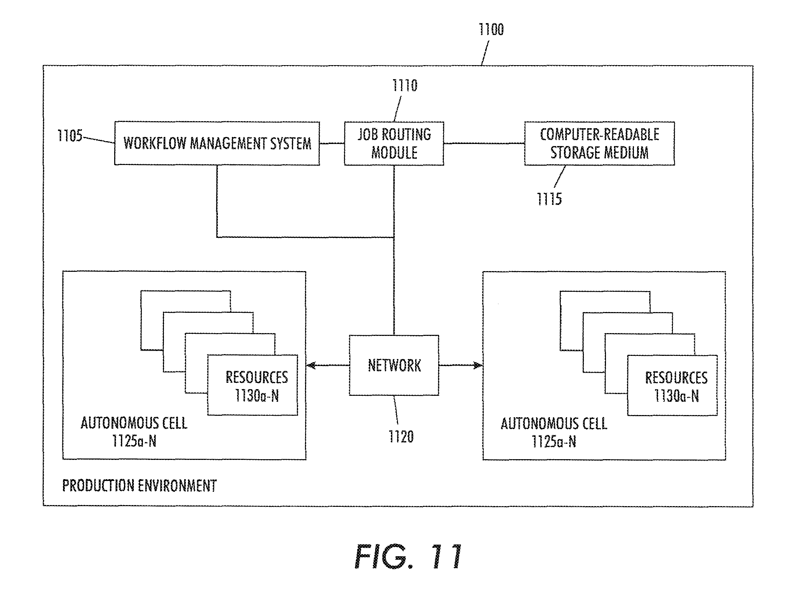

FIG. I 1 depicts an environment suitable for practicing the illustrative embodiments. The production environment **1100** may include a workflow management system **1105** that is responsible for managing workflow in the production environment **1100**, a job routing module **1110** that is responsible for routing jobs to resources and/or autonomous cells and a computer-readable storage medium **1115**. The production environment **1100** may also include resources **1130a-N** such as a printer, a copier, a binder, a hole-punch, a collator, a sealer or any other equipment used to process jobs. The resources may be grouped into autonomous cells **1125a-N** such that each autonomous cell **1125a-N** includes one or more resources **1130a-N** necessary to process at least one job. The workflow management system **1105** may be implemented on a stand-alone computer system or may be integrated into the resources. The workflow management system **1105** may also be implemented by distributed components such as separate electronic devices. A network **1120** may interconnect the resources **1130a-N** with the workflow management system **1105**, as illustrated in FIG. 11. The network **1120** may include a local area network (LAN) or a wide area network (WAN) such as the Internet, the World Wide Web or the like. The network **1120** may also be formed by communication links that interconnect the workflow management system **1105** and the resources **1130a-N**. Alternatively, the disclosed embodiments may be practiced in environments where there is no network connection.

It will be appreciated that various of the above-disclosed and other features and functions, or alternatives thereof, may be desirably combined into many other different systems or applications. Also that various presently unforeseen or unanticipated alternatives, modifications, variations or improvements therein may be subsequently made by those skilled in the art which are also intended to be encompassed by the following claims.

## Claims

1. A system of scheduling a plurality of print jobs in a document production environment, the system comprising:
a plurality of print job processing resources;
a computer-readable storage medium comprising one or more programming instructions for performing a method of processing a plurality of print jobs in a document production environment, the method comprising:
receiving a plurality of print jobs and at least one setup characteristic corresponding to each print job, wherein each print job has a corresponding job size,
determining, for each print job, whether the corresponding job size exceeds a job
size threshold,
grouping each print job having a job size that exceeds the job size threshold into a
large job subgroup,
grouping each print job having a job size that does not exceed the job size threshold into a small job subgroup,
routing the small job subgroup to a small job autonomous cell comprising
one or
more resources for processing the small job subgroup,
classifying the large job subgroup as a high setup subgroup or a low setup subgroup based on the setup characteristics corresponding to each print job in the large job subgroup,
routing the large job subgroup to a large job autonomous cell wherein, if the large
job subgroup is a high setup subgroup, the large job autonomous cell comprises one or more first resources for processing the large job subgroup and wherein, if the large job subgroup is a low setup subgroup, the large job autonomous cell comprises one or more second resources for processing the large job subgroup.

2. The system of claim 1, wherein grouping each print job having a job size that exceeds the job size threshold into a large job subgroup comprises one or more programming instructions for:
arranging the print jobs in the large job subgroup based on an order in which each print
job was received.

3. The system of claim 1, wherein grouping each print job having a job size that does not exceed the job size threshold into a small job subgroup comprises one or more programming instructions for:
arranging the print jobs in the small job subgroup based on an order in which each print
job was received.

4. The system of claim 1, wherein grouping each print job having a job size that exceeds the job size threshold into a large job subgroup comprises one or more programming instructions for:
arranging the print jobs in the large job subgroup based on a due date of each print job.

5. The system of claim 1, wherein grouping each print job having a job size that does not exceed the job size threshold into a small job subgroup comprises one or more programming instructions for:
arranging the print jobs in the small job subgroup based on a due date of each print job.

6. The system of claim 1, wherein classifying the large job subgroup comprises one or more programming instructions for:
identifying one or more setup characteristics associated with the large job subgroup, wherein each setup characteristic has one or more associated types;
for each setup characteristic, determining the number of types associated with the large job subgroup;
determining that the large job subgroup is a high setup subgroup if the number of associated types of at least one setup characteristic exceeds a threshold value associated with the
setup characteristic; and
determining that the large job subgroup is a low setup subgroup if, for each setup characteristic, the number of corresponding types does not exceed the threshold value associated with the setup characteristic.

7. The system of claim 6, further comprising one or more programming instructions for:
comparing the number of associated types to an average number of types associated with
the setup characteristic over a specified time period.

8. The system of claim 1, wherein routing the small subgroup comprises one or more programming instructions for: using a routing policy selected from a random policy, a round-robin policy, a least work-in-progress policy and a size interval task assignment with equal load policy.

9. The system of claim 1, wherein routing the large job subgroup comprises one or more programming instructions for:
determining a work-in-progress level for each large job autonomous cell, wherein the work-in-progress level represents a level of print work that is being processed in the large job autonomous cell at a specified time; and
routing the large subgroup to the large job autonomous cell with the smallest work-in-progress level.

10. The system of claim 1, wherein routing the large job subgroup comprises one or more programming instructions for:
using a round-robin policy to route the large job subgroup to a large job autonomous cell.

11. The system of claim 1, wherein routing the large job subgroup comprises one or more programming instructions for:
randomly routing the large job subgroup to a large job autonomous cell.

12. The system of claim 1, wherein routing the large job subgroup comprises one or more programming instructions for:
determining a range of job sizes for the print jobs in the large job subgroup; and
routing the large job subgroup to a large job autonomous cell, wherein the large job autonomous cell processes the determined range of job sizes.

13. A computer-implemented method of scheduling a plurality of print jobs in a document production environment, the method comprising:
receiving a plurality of print jobs and at least one setup characteristic corresponding to
each print job, wherein each print job has a corresponding job size,
determining, for each print job, whether the corresponding job size exceeds a job size threshold,
grouping each print job having a job size that exceeds the job size threshold into a large job subgroup,
grouping each print job having a job size that does not exceed the job size threshold into a small job subgroup,
routing the small job subgroup to a small job autonomous cell comprising one or more resources for processing the small job subgroup,
classifying the large job subgroup as a high setup subgroup or a low setup subgroup based on the setup characteristics corresponding to each print job in the large job subgroup, routing the large job subgroup to a large job autonomous cell wherein, if the large job subgroup is a high setup subgroup, the large job autonomous cell comprises one or more first resources for processing the large job subgroup and wherein, if the large job subgroup is a low
setup subgroup, the large job autonomous cell comprises one or more second resources for processing the large job subgroup.

14. The method of claim 13, wherein grouping each print job having a job size that exceeds the job size threshold into a large job subgroup comprises: arranging the print jobs in the large job subgroup based on an
order in which each print
job was received.

15. The method of claim 13, wherein grouping each print job having a job size that does not exceed the job size threshold into a small job subgroup comprises:
arranging the print jobs in the small job subgroup based on an order in which each print job was received.
